Europäisches Patentamt

European Patent Office

Office européen des brevets

(19)

(11) Veröffentlichungsnummer : **0 137 956**
**B1**

(12) **EUROPÄISCHE PATENTSCHRIFT**

(45) Veröffentlichungstag der Patentschrift :
07.03.90

(51) Int. Cl.$^5$ : **B 01 D 45/06**

(21) Anmeldenummer : 84109696.9

(22) Anmeldetag : 14.08.84

(54) Tropfenabscheider zum Abscheiden von Tropfen aus einer Gasströmung.

(30) Priorität : 24.08.83 DE 3330533
22.02.84 DE 3406425

(43) Veröffentlichungstag der Anmeldung :
24.04.85 Patentblatt 85/17

(45) Bekanntmachung des Hinweises auf die Patenterteilung : 07.03.90 Patentblatt 90/10

(84) Benannte Vertragsstaaten :
AT BE CH DE FR GB IT LI LU NL SE

(56) Entgegenhaltungen :
WO--A--80 /010 46
DE--A-- 1 544 115
FR--A-- 2 452 955
US--A-- 4 430 101

(73) Patentinhaber : **Wurz, Dieter, Prof. Dr.-Ing.**
**Riefstahlstrasse 6**
**D-7500 Karlsruhe (DE)**

(72) Erfinder : **Wurz, Dieter, Prof. Dr.-Ing.**
**Riefstahlstrasse 6**
**D-7500 Karlsruhe (DE)**

(74) Vertreter : Liesegang, Roland, Dr.-Ing.
**FORRESTER & BOEHMERT** Widenmayerstrasse 4
**Postfach 22 01 37**
**D-8000 München 22 (DE)**

## Beschreibung

Die Erfindung betrifft einen Tropfenabscheider zum Abscheiden von Tropfen aus einer Gasströmung, wobei mittels Profilen mit Verengungen und Umlenkungen versehene Strömungskanäle gebildet sind, an deren Wänden die Tropfen abgeschieden werden und die so ausgerichtet sind, daß die abgeschiedene Flüssigkeit auf diesen Wänden zum Eintritt der Strömungskanäle hin unter Wirkung der Schwerkraft abströmen kann.

Ein solcher Tropfenabscheider ist beispielsweise aus der DE-OS 15 44 115 bekannt.

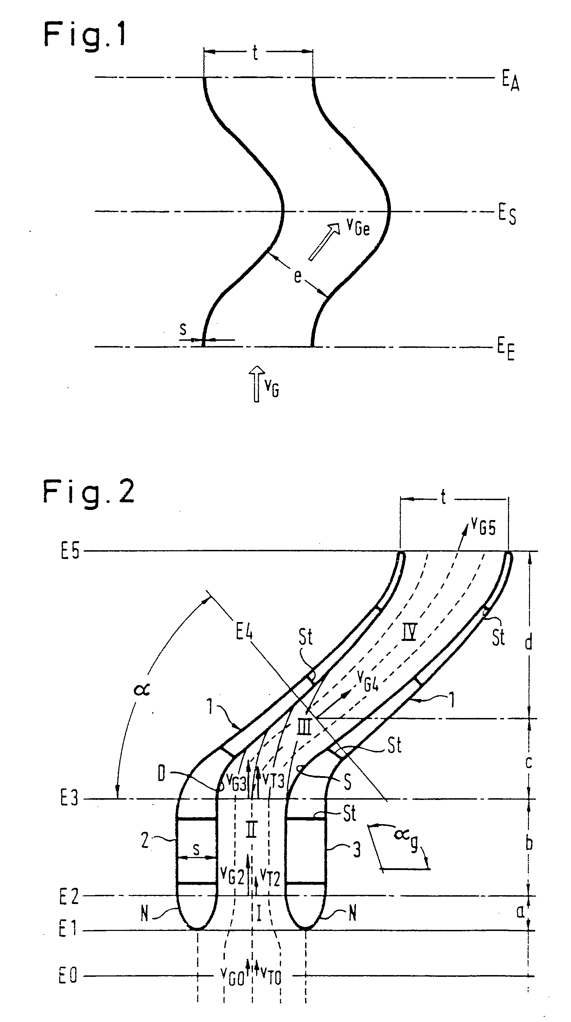

Dabei sind zur Abscheidung der Flüssigkeitstropfen aus Gasströmungen, wie in Fig. 1 gezeigt, parallel und symmetrisch zu einer Ebene $E_s$ gebogene Profile aus Blech oder Kunststoff vorgesehen, die eine zweifache Umlenkung der Strömung zwischen Eintrittsebene $E_E$ und Austrittsebene $E_A$ mit jeweils einer Strömungskanalverengung bewirken. Die Profile haben über die Strömungskanallänge gleichbleibende Stärke. Die mit Tropfen beladene Strömung wird in den Verengungen jeweils beschleunigt. Je größer ein Tropfen ist, umso weniger kann er der Umlenkung folgen. Die Tropfen werden aus der Kurve getragen und treffen auf die Abscheidefläche eines Profiles. Dabei können drei Arten der Wechselwirkung zwischen Tropfen und Abscheidefläche auftreten :

a) die Tropfen werden von der Fläche eingefangen ;
b) die Tropfen werden reflektiert ;
c) die Tropfen zerplatzen und werden zum Teil eingefangen, zum Teil reflektiert.

Mit der den Tropfenabscheidungsprozeß störenden Reflexion ist insbesondere dann zu rechnen, wenn die Tropfen annähernd tangential zur Abscheidefläche auftreffen.

Da bei dem bekannten Tropfenabscheider die Tropfen aufgrund ihrer Trägheit der durch die Verengung auf kurzer Strecke bedingten Geschwindigkeitszunahme nicht folgen können, erreichen die Tropfen im Umlenkbereich bei weitem nicht die hohe Geschwindigkeit der Gasphase, wie sie für die Tropfenabscheidung vorteilhaft wäre. Um einen befriedigenden Abscheidegrad zu erzielen, müssen die Anströmgeschwindigkeit und/oder die Umlenkung groß gemacht werden, was beides zu hohen Druckverlusten führt.

Der Erfindung liegt die Aufgabe zugrunde, einen Tropfenabscheider der eingangs genannten Art so auszubilden, daß möglichst alle, d. h. auch kleine und schwebende Tropfen, mit hohem Abscheidegrad bei möglichst geringem Druckverlust abgeschieden werden.

Diese Aufgabe wird erfindungsgemäß dadurch gelöst, daß die Profile zwischen sich je eine Tropfenbeschleunigungsstrecke vor der ersten Umlenkung bilden, die so bemessen ist, daß mindestens kleine Tropfen am Eintritt in die Umlenkung auf eine Geschwindigkeit beschleunigt sind, die nur noch wenig verschieden von der Gasgeschwindigkeit an dieser Stelle ist.

Gemäß der Erfindung wird der Strömungsquerschnitt im Bereich vor der ersten Umlenkung verringert. Dadurch erhöht sich die Geschwindigkeit der Gasphase. Die Tropfen werden von dieser auf eine hohe Geschwindigkeit beschleunigt, bevor sie in den Bereich der ersten Umlenkung gelangen. Einer Beschleunigung der Tropfen vor der ersten Umlenkung, d. h. im Eintrittsbereich des Strömungskanals, stand bisher die Sorge entgegen, daß eine solche Beschleunigung im Hinblick auf die zum Eintritt zurückströmende und von dort in großen Tropfen sich ablösende abgeschiedene Flüssigkeit ungünstig ist. Über dieses seit Jahren vorhandene Vorurteil der Fachwelt setzt sich die Erfindung mit überraschendem Erfolg hinweg.

Mit einem Tropfenabscheider nach der Erfindung sind im Vergleich zu den bisher üblichen Tropfenabscheidern Minderungen des Druckverlustes zwischen 20-40 % ohne Verschlechterung der Abscheideleistung zu erwarten. Dies ermöglicht beispielsweise beim Einsatz des neuen Tropfenabscheiders in Naturzugkühltürmen eine beträchtliche Einsparung an Kaminhöhe und beim Einsatz in Ventilatorkühltürmen eine beträchtliche Einsparung an Ventilator-Antriebsleistung, weil die Tropfenabscheider nach der Erfindung bei gleicher Abscheideleistung der Profile mit einer kleineren Geschwindigkeit angeströmt werden können.

Gemäß einer bevorzugten Ausgestaltung der Erfindung ist der Tropfenbeschleunigungsstrecke mit etwa gleichbleibendem oder im wesentlichen stetig sich verengendem Strömungsquerschnitt eine Gasbeschleunigungsstrecke vorgeschaltet. In der kurzen Gasbeschleunigungsstrecke wird das Gas schnell auf eine hohe Geschwindigkeit gebracht, während die Tropfen aufgrund ihrer wesentlich größeren Trägheit ihre Geschwindigkeit nicht oder nur geringfügig erhöhen. In der Tropfenbeschleunigungsstrecke, die selbstverständlich auch zur weiteren Erhöhung der Gasgeschwindigkeit ausgestaltet sein kann (z. B. durch eine stetige Querschnittsverengung), werden die Tropfen infolge ihres Strömungswiderstandes von der schnelleren Gasphase beschleunigt, bevor die Tropfen in die erste Umlenkung gelangen. Dies ist für die Tropfenabscheidung vorteilhaft, weil schnellere Tropfen eher ihre Richtung beibehalten wollen, also eher auf die Druckseiten der Umlenkbereiche ausgeschleudert werden und weil sie demzufolge auch mit größeren Winkeln auf die Profile auftreffen, sodaß eine Tropfenreflexion weniger zu befürchten ist. Außerdem kann mit geringen Geschwindigkeiten die gleiche Abscheideleistung wie bisher erzielt werden, was geringere Druckverluste zur Folge hat. Eine Umlenkung genügt, wenngleich mehrere hintereinandergeschaltete Umlenkungen die Abscheideleistung steigern können.

Um den Druckverlust weiter zu verringern, ist nach einer weiteren wichtigen Ausgestaltung der Erfindung vorgesehen, daß die Stärke der Profile in Richtung zur Austrittsebene der Strömungskanäle, beginnend mit der ersten Umlenkung zur Bildung von Diffusoren mit einem Öffnungswinkel zwischen 4˚ und 12˚ vermindert ist.

Eine Schwierigkeit stellt die sichere Ableitung der Wasserfilme dar, die sich auf dem Tropfenabscheider aus den abgeschiedenen Tropfen bilden, wobei vermieden werden muß, daß kleine Tropfen von der Gasströmung wieder mitgenommen werden.

Zu diesem Zweck ist nach einer weiteren Ausgestaltung der Erfindung vorgesehen, daß die Profile mit zur Eintrittsebene hin ausmündenden Ablaufrinnen für die abgeschiedene Flüssigkeit versehen sind, welche die als dünnen Film abgeschiedene Flüssigkeit in dickere Einzelsträhnen überführen und ohne die Gefahr erneuter Mitnahme durch die Gasströmung von den Eintrittskanten der Profile abfließen bzw. abtropfen lassen.

Um die Abscheideleistung weiter zu verbessern ist gemäß einer weiteren wichtigen Ausgestaltung der Erfindung vorgesehen, daß die Tropfenbeschleunigungsstrecke zur Anströmrichtung die erste Umlenkung verstärkend unter einem Winkel nicht größer als 30˚, vorzugsweise zwischen 5˚ und 20˚ geneigt, und dabei vorteilhaft schwach gekrümmt ist.

Bei einem so ausgestalteten Tropfenabscheider nach der Erfindung wird ein ausreichender Abstand der Strömungsgeschwindigkeit zur sogenannten « Durchbruchsgeschwindigkeit », oberhalb welcher der abgeschiedene Flüssigkeitsfilm entgegen der Erdbeschleunigung zur Hinterkante der Abscheidefläche mitgenommen wird, sichergestellt und gleichwohl ein sehr niedriger Druckverlust realisiert. Dies rührt daher, daß die Tropfenbeschleunigungsstrecke so ausgeführt ist, daß die Tropfen unter einem günstigeren Winkel auf die erste Abscheidefläche ausgeschleudert werden.

Die Profilstärke in der Tropfenbeschleunigungsstrecke liegt vorteilhaft im Bereich des 0,2- bis 0,6-fachen des Mittenabstandes zweier benachbarter Profile, während die Länge der Tropfenbeschleunigungsstrecke vorzugsweise etwa das 0,5- bis 2-fache des Mittenabstandes zweier benachbarter Profile beträgt.

Die geringfügig erscheinende Umlenkung der Tropfenbahnen in der Tropfenbeschleunigungsstrecke hat zur Folge, daß der Neigungswinkel der ersten Abscheidefläche zu einer parallel zur Eintrittsebene des Tropfenabscheiders stehenden Ebene relativ groß gewählt werden darf, ohne daß der für eine effiziente Abscheidung erforderliche Auftreffwinkel auf die erste Abscheidefläche zu klein wird. Ein großer Neigungswinkel ist deshalb vorteilhaft, weil die Strömung dann zum Austritt der Tropfenabscheider hin nur noch relativ wenig umzulenken ist, was wiederum zu einer Verringerung der Druckverluste führt.

Sollen mit einem Tropfenabscheider besonders hohe Abscheidegrade erzielt werden, so ist in weiterer Ausgestaltung der Erfindung zweckmäßig, wenn an die Abscheidefläche hinter der ersten Umlenkung mindestens eine zweite Umlenkung mit nachfolgender weiterer Abscheidefläche anschließt. Die Verwirklichung dieses Gedankens bringt auch ohne die leichte Neigung bzw. Krümmung der ersten Tropfenbeschleunigungsstrecke eine Verbesserung der Abscheideleistung.

Es ist günstig, wenn die Austrittsenden der Profile verdickt sind. Dies ermöglicht es, die Abscheideflächen in einem günstigen Winkel zu den anfliegenden Tropfen auszurichten. Diese Ausführung hat außerdem den Vorteil, daß die Tropfenabscheider begehbar werden, wenn man Bretter quer über die Austrittsränder legt. Dies ist von Vorteil insbesondere bei der Anwendung der Tropfenabscheider nach der Erfindung in Kühltürmen.

Je nach der Größenverteilung der Tropfen kann es vorteilhaft sein, die zweite Abscheidestufe nicht nur für das Einfangen reflektierter Tropfen auszulegen, sondern prinzipiell für die Abscheidung kleinerer Tropfen. Dies kann gemäß einer weiteren Ausgestaltung der Erfindung dadurch geschehen, daß der Strömungskanal im Bereich hinter der ersten und/oder hinter jeder weiteren Umlenkung eine Verengung zum Schaffen einer weiteren Tropfenbeschleunigungsstrecke aufweist. In diesem Fall ist es günstig, die Krümmungsradien an der zweiten Umlenkung kleiner zu wählen als an der ersten, mit anderen Worten die Strömung stärker umzulenken, um ausreichend große Fliehkräfte zu erzeugen, die für das Abscheiden der kleineren Tropfen erforderlich sind.

Daraus ergeben sich insbesondere Vorteile für die Entwässerung aufgrund einer günstigeren Schubspannungsverteilung an den Profilen.

Die bisher behandelten Tropfenabscheider sind für die Anwendung bei Gegenstrom, d. h. bei zur abströmenden Flüssigkeit entgegengesetztem Gasstrom bestimmt. Die profile sind deshalb so einzubauen, daß das abgeschiedene Wasser zum Eintritt der zwischen den Profilen gebildeten Strömungskanäle zurückströmt, z. B. mit der Profillängsrichtung horizontal und der Profilquerrichtung vertikal. Bei Anwendungsfällen mit Kreuzstrom, d. h. quer zur abfließenden abgeschiedenen Flüssigkeit strömendem Gasstrom, ist eine entsprechende Umgestaltung erforderlich, z. B. mit Fangrillen (DE-OS 21 46 205, DE-AS 22 51 173, DE-OS 23 47 984) oder Vorsprügen (DE-OS 22 33 480) auf den Abscheideflächen, um das abgeschiedene Wasser quer zur Gasströmung, d. h. in Längsrichtung der Profile abströmen zu lassen.

Mit der Erfindung soll auch ein solcher Tropfenabscheider hinsichtlich der Druckverluste und der Abscheideleistung optimiert werden. Gemäß einem weiteren Aspekt der Erfindung ist dazu bei einem Tropfenabscheider zum Abscheiden von Tropfen aus einer Gasströmung, wobei mittels Profilen mit Verengungen und Umlenkungen versehene Strömungskanäle gebildet sind, an deren Wänden die Tropfen abgeschieden werden und die so ausgerichtet sind, daß die abgeschiedene Flüssigkeit im wesentlichen quer zur Hauptströmungsrichtung auf diesen Wänden unter Wirkung der Schwerkraft abströmen kann, wobei zwischen benachbarten Profilen eine Tropfenbeschleunigungsstrecke im Bereich vor der ersten Umlenkung gebildet ist und Fangrillen auf der oder jeder auf eine Umlenkung folgenden Abscheidefläche angeordnet sind, erfindungsgemäß vorgesehen, daß die größte Profilstärke jedes Profils etwa das 0,2- bis 0,6-fache des Mittenabstandes zweier benachbarter Profile beträgt, daß die Länge der Tropfenbeschleunigungsstrecke etwa das 0,5- bis 2-fache des Mittenabstandes beträgt und daß die Fangrillen so auf den Abscheideflächen angeordnet sind, daß ihre Spitze in Strömungsrichtung gesehen einen Abstand von der vorausgehenden Umlenkung zwischen 1/4 und 2/3 der Länge der auf die Umlenkung folgenden Abscheidefläche haben.

Diese Ausgestaltung des Tropfenabscheiders nach der Erfindung führt zu einer erheblichen Verbesserung der Abscheidewirkung auch ohne die oben beschriebene leichte Neigung bzw. Krümmung der Tropfenbeschleunigungsstrecke vor der ersten Umlenkung.

Ein Vorteil dieser Ausgestaltung der Erfindung besteht darin, daß auch reflektierte Tropfen von den Fangrillen eingefangen werden. Die Fangrillen liegen in einem Bereich, der von einem Wasserstrahl für Reinigungszwecke noch gut erreicht wird. Dies ist insbesondere dann von Interesse, wenn die Tropfen mit krustenbildenden Stoffen beladen sind, wie dies beispielsweise bei Rauchgaswäschern der Fall ist.

Die Erfindung betrifft auch ein Verfahren mit den Merkmalen des Anspruchs 17.

Die Erfindung ist im folgenden anhand schematischer Zeichnungen an Ausführungsbeispielen mit weiteren Einzelheiten näher erläutert. Es zeigen:

Fig. 1 einen Querschnitt durch zwei benachbarte Profile eines herkömmlichen Tropfenabscheiders;

Fig. 2 einen Querschnitt durch zwei benachbarte Profile eines Tropfenabscheiders gemäß der Erfindung;

Fig. 3 einen Querschnitt durch ein abgewandeltes Profil gemäß der Erfindung;

Fig. 4 eine Teilansicht des Profils nach Fig. 3;

Fig. 5 eine Herstellungsstufe des Profils nach Fig. 4;

Fig. 6 einen Querschnitt durch zwei benachbarte Profile eines abgewandelten Tropfenabscheiders nach der Erfindung;

Fig. 7a und Fig. 7b Wandteile von Abscheideflächen des Tropfenabscheiders nach Fig. 6, wobei Strömungserscheinungen dargestellt sind, die im Betrieb auftreten;

Fig. 8 einen Querschnitt durch benachbarte Profile eines zweistufigen Tropfenabscheiders nach der Erfindung, wobei zwei alternative Profilkonstruktionen gezeigt sind;

Fig. 9 einen Querschnitt durch benachbarte Profile eines gegenüber Fig. 8 abgewandelten Tropfenabscheiders und

Fig. 10 einen Querschnitt durch benachbarte Profile einer weiteren Ausführungsform eines Tropfenabscheiders nach der Erfindung.

Die in den Figuren gezeigten Profile setzen sich in Richtung senkrecht zur Zeichenebene mit beliebiger Länge und stets gleichbleibendem Querschnitt fort.

In den Figuren und in der folgenden Beschreibung bedeuten:

a. Länge der Beschleunigungsstrecke der Gasphase;

b. Länge der Tropfenbeschleunigungsstrecke;

c. Länge der Umlenkung für die Gasphase, bzw. Abscheidelänge;

d. Länge der Verzögerungsstrecke der Gasphase, in welcher Druckenergie zurückgewonnen wird;

e. Engster Kanalquerschnitt;

g. Erdbeschleunigung;

h. Einziehung auf konkaver Profilseite

$l_A$. Länge der Abscheidefläche A;

r. Krümmungsradius an der Umlenkung;

s. Maximale Profilstärke in erster Tropfenbeschleunigungsstrecke;

t. Teilung bzw. Mittenabstand der Profile;

$v_G$. Geschwindigkeit des Gases in den Ebenen E;

$v_T$. Geschwindigkeit der Tropfen in den Ebenen E;

A. Abscheidefläche;

D. Druckseite oder konkave Profilseite;

E. Ebene quer zur Anströmrichtung, in Strömungsrichtung aufsteigend numeriert;

F. Fangrille;

L. Lippe der Fangrille;

LS. Lippenspitze;

N. Nase der Profile;

S. Saugseite oder konvexe Profilseite;

St. Stege zur Versteifung der Hohlprofile;

T. Tropfen;

V. Verdickung;

I. Gasbeschleunigungsstrecke;

II. Tropfenbeschleunigungsstrecke;

III. Erste Umlenk- und Abscheidestrecke;

IV. Diffusorstrecke;

V. Zweite Umlenk- und Abscheidestrecke;

VI. Zweite Tropfenbeschleunigungsstrecke;

$\alpha$. Maximaler Umlenkwinkel;

$\alpha_g$. Einbauwinkelbereich relativ zur Richtung der Erdbeschleunigung g;

$\beta$. Diffusorwinkel des in der Ebene $E_4$ beginnenden und in der Austrittsebene $E_5$ endenden Diffusors;

$\gamma$. Mittlerer Neigungswinkel der Tropfenbeschleunigungsstrecke II;

$\delta$. Auftreffwinkel der Tropfen auf die Abscheidefläche A;

$\varepsilon$. Neigung der Abscheidefläche A zur Ebene E;

$\tau_w$. Wandschubspannung;

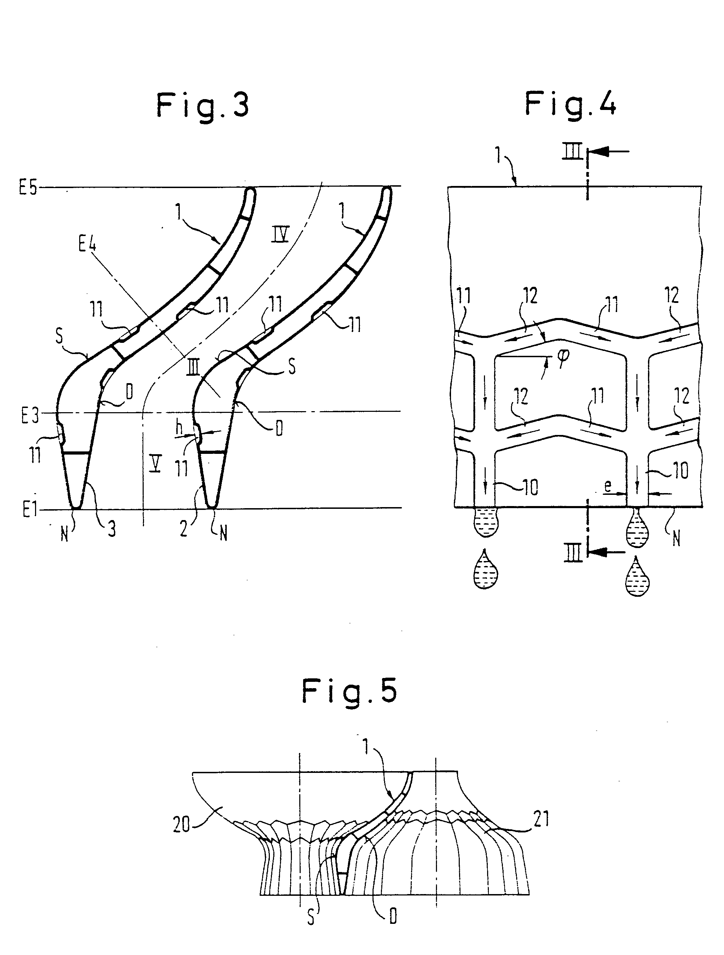

$\varphi$. Neigungswinkel der Äste 11, 12 (Fig. 4).

Gemäß Figur 2 hat jedes Profil 1 eine in der Eintrittsebene E1 ansetzende abgerundete Nase N mit sich stetig bis zu einer maximalen Profilstärke s erweiterndem Querschnitt. Die Länge a an der Nase N in Strömungsrichtung beträgt etwa zwischen dem 0,2-fachen bis 1-fachen der Länge b der nachfolgenden, in Anströmrichtung verlaufenden Tropfenbeschleunigungsstrecke II, deren Länge b wiederum im Bereich zwischen etwa dem 0,5- bis 2-fachen des Mittenabstandes t liegt.

Die maximale Profilstärke s in der Tropfenbeschleunigungsstrecke II bleibt über die Länge b etwa konstant und liegt vorteilhaft im Bereich des 0,2- bis 0,6-fachen des Mittenabstandes t.

Der Mittenabstand t beträgt bei einer für den Einbau in Kühltürmen geeigneten Konstruktion beispielsweise etwa 40 mm, während die Gesamtprofilhöhe a + b + c + d etwa 150 mm beträgt. Diese Zahlenwerte sollen lediglich beispielhaft die tatsächlichen Profilabmessungen illustrieren.

Der mittlere Winkel $\alpha$ der ersten Umlenkung soll zwischen 20° und 70° liegen. Die Werte für c und d ergeben sich im wesentlichen aus den oben angegebenen Größen a, b, s, t und $\alpha$, $\beta$.

In der Ebene E3 setzt ein Strömungskanalabschnitt in Gestalt der ersten Umlenkung III des Strömungskanals an. Ab dieser Ebene E3 wird die Wandstärke der Hohlprofile kontinuierlich verringert, so daß die Verengung des Strömungsquerschnittes von der Ebene E3 bis zur Ebene E4 nicht allzu groß ausfällt. In der senkrecht zum Strömungsverlauf stehenden Ebene E4 endet die erste Umlenkung III. Der Winkel $\alpha$ zwischen den Strömungsquerschnitten in den Ebenen E3 und E4 beträgt bei dem gezeigten Beispiel 45°. Er kann, wie gesagt, im Bereich zwischen etwa 20° und 70° liegen.

Gas und kleine Tropfen haben in der Ebene E0 vor der Eintrittsebene E1 etwa gleiche Geschwindigkeit $v_{G0}$, $v_{T0}$. In der Ebene E2 ist das Gas aufgrund der ersten Verengung I auf eine wesentlich höhere Geschwindigkeit $v_{G2}$ beschleunigt als die Tropfengeschwindigkeit $v_{T2}$. In der Tropfenbeschleunigungsstrecke II werden die Tropfen von den schnelleren Gasmolekülen durch Stoßwechselwirkung beschleunigt, so daß sie in der Ebene E3 nahezu die gleiche Geschwindigkeit $v_{T3}$ erreicht haben wie die Gasgeschwindigkeit $v_{G3}$. Die Tropfen folgen aufgrund ihrer hohen Wucht der Umlenkung III nur wenig, sondern beschreiben abweichend von den Gasströmungsbahnen (gestrichelt in Fig. 2 dargestellt) Tropfenbahnen (durchgezogen gezeichnet), welche die Tropfen auf die Druckseite D der Profile unter eine Reflexion weitgehend vermeidenden Auftreffwinkeln führen. Somit wird ein Großteil der Tropfen einschließlich kleiner und schwebender Tropfen aus der Gasströmung abgeschieden.

Anschließend an die Ebene E4 beginnt ein divergenter Strömungskanalabschnitt in Form eines Diffusors IV, der eine sanfte zweite Umlenkung in entgegengesetzter Richtung zur ersten Umlenkung bildet. Auf diese Weise verläßt die Gasströmung in der Austrittsebene E5 den Strömungskanal nur unter einem kleinen Winkel, d. h. angenähert parallel zur Eintrittsströmungsrichtung in der Ebene E1, mit der Geschwindigkeit $v_{G5}$, die kleiner als die Geschwindigkeit $v_{G4}$ im engsten Querschnitt in der Ebene E4 ist. Die Erweiterung des Diffusors IV ist durch fortgesetzte Verringerung der Profilwandstärke sowie durch die sanfte zweite Umlenkung erreicht. Der Diffusor-Öffnungswinkel $\beta$ liegt dabei im Bereich zwischen 4° und 12°.

Die Abscheider 1 nach Fig. 2 können mit unterschiedlicher Neigung bezüglich der Vertikalen eingebaut werden. Ein Einbau-Winkelbereich $\alpha_g$ ist in Fig. 2 zwischen etwa 0° und 120° angedeutet. In der Einbaulage « 0° » liegt die Tropfenbeschleunigungsstrecke II horizontal. Würde dieser Winkel unterschritten, so könnte die abgeschiedene Flüssigkeit sich in den von den Druckseiten D gebildeten Mulden sammeln, würde also nicht mehr in Richtung der Nasen, d. h. entgegen der Anströmrichtung abfließen können.

Die Fig. 3 und 4 zeigen eine abgewandelte Ausführung der Profile.

Die Abwandlung besteht hauptsächlich darin, daß die erste Verengung I und die Tropfenbeschleunigungsstrecke II durch eine gemeinsame Beschleunigungsstrecke V für Gas und Tropfen ersetzt ist. In dieser Beschleunigungsstrecke V verlaufen die Profilwände zur Bildung eines Düsenabschnitts konisch bis zur Ebene E3, in welcher die erste Umlenkung III beginnt. Die Profil- bzw. Strömungskanalausbildung ist ab hier gleich wie bei Fig. 2 und nicht nochmals beschrieben. Bei den Profilen nach Fig. 3 wird das Gas in der Beschleunigungsstrecke V sanfter beschleunigt als in der ersten Verengung I nach Fig. 2. Das Gas trägt daher nicht so stark zur Tropfenbeschleunigung bei wie in der Tropfenbeschleunigungsstrecke II nach Fig. 2, an deren Eintritt das Gas bereits auf eine hohe Geschwindigkeit beschleunigt ist.

Die Fig. 3 und 4 zeigen ein ergänzendes Merkmal, das zweckmäßig auch bei den Profilen nach Fig. 2 verwirklicht, dort aber nicht gezeichnet ist. Danach sind Ablaufrinnen für das abgeschiedene Wasser mit Stämmen 10 und entgegengesetzt geneigt davon abzweigenden Ästen 11, 12 beidseitig in die Profile 1 eingeprägt. Die Stämme 10 münden an den Nasen N der Profile aus. Die Breite e der Stämme und Äste liegt zwischen etwa 4 und 10 mm und die Tiefe h etwa zwischen 0,5 und 2 mm. Der Neigungswinkel $\varphi$ der Äste 11, 12 liegt im Bereich zwischen etwa 10° und 30°.

Die Äste 11, 12 sind auf der Druckseite D der Profile vorteilhaft im Abscheidebereich vorgesehen, d. h. jenseits der Ebene E3 bzw. des Beginns der ersten Umlenkung III. Dagegen liegt der erste Ast 11 auf der Saugseite S vorzugsweise bereits vor der ersten Umlenkung im Bereich der Beschleunigungsstrecke II oder V, um die bereits in diesem Bereich durch Reflexion von der Druckseite D vereinzelt gelangenden Tropfen abzuleiten.

Fig. 5 zeigt das Einprägen der Ablaufrinnen 10, 11, 12 in ein Profil 1 gemäß Fig. 2. Dabei wird das Profil 1 vorzugsweise unmittelbar nach dem Extrudieren durch zwei beheizte Walzen 20, 21 geführt, welche das « Negativ » der Ablaufrinnen 10, 11, 12 jeweils der Saugseite S bzw. der Druckseite D auf ihrer Oberfläche eingeprägt haben. Die gegenläufigen Walzen 20, 21 prägen also beim Durchlauf des Profils 1 die Ablaufrinnen 10, 11, 12 in einem einzigen Arbeitsgang in die Saugseite S und die Druckseite D ein.

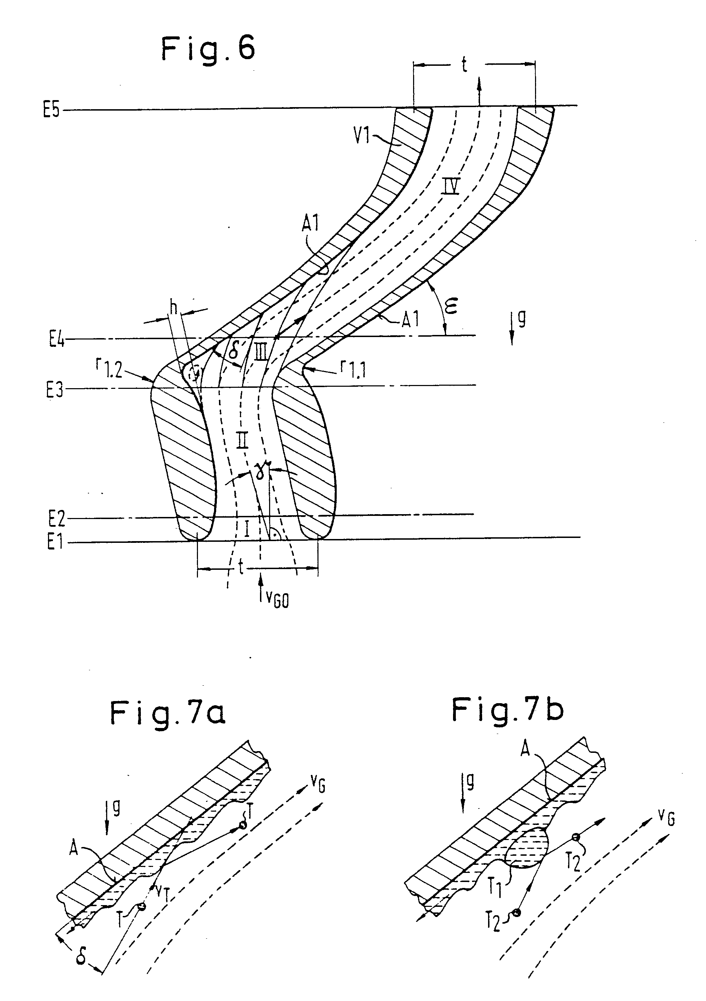

Die Profilausführung nach Fig. 6 unterscheidet sich von derjenigen nach Fig. 2 in folgender Hinsicht:

In der Tropfenbeschleunigungsstrecke II ist jedes Profil ausgehend von einem Winkel $\gamma = 0°$ in der Ebene EI bis zur Ebene der Umlenkung E3 zur Anströmrichtung schwach und so gekrümmt, daß die erste Umlenkung verstärkt wird. Der mittlere Winkel $\gamma$ beträgt bei der gezeigten Ausführung vorteilhaft ca. 12°. Er kann je nach den Anforderungen einen Wert bis zu 30° annehmen. Die Profilseite 3 ist in den Strömungskanal hineingewölbt, während die Profilseite 2 im wesentlichen eben ist. Wenngleich die Profile der Tropfenbeschleunigungsstrecke II auch ungekrümmt unter dem Winkel $\gamma$ geneigt sein können, ist eine Anordnung mit $\gamma = 0$ in der Ebene EI und anschließender schwacher Krümmung vorzuziehen, um optimale Anströmverhältnisse zu erzielen.

Die bis zur Ebene E3 etwa auf Gasgeschwindigkeit beschleunigten Tropfen werden in der ersten Umlenkung III weniger als die Gasströmung umgelenkt und treffen unter einem Winkel $\delta$ auf die Abscheidefläche AI auf. Dieser Winkel $\delta$ ist aufgrund der Neigung $\gamma$ der Tropfenbeschleunigungsstrecke II größer und damit günstiger als bei den Profilen nach Fig. 2, so daß Tropfenreflexion wirksamer als mit den Profilen nach Fig. 2 vermieden wird.

Die Tropfenbeschleunigungsstrecke II hat zweckmäßig eine Länge von etwa dem 0,5- bis 2-fachen des Mittenabstandes t zweier benachbarter Profile. Die geringfügig erscheinende Umlenkung der Tropfenbahnen in der Beschleunigungsstrecke ermöglicht es, den Neigungswinkel $\epsilon$ der Abscheidefläche AI gegenüber einer Ebene E relativ groß zu wählen, ohne daß der für eine effiziente Abscheidung erforderliche Auftreffwinkel $\sigma$ zu klein wird. Ein großer Neigungswinkel $\epsilon$ ist vorteilhaft, weil die Strömung in Richtung zum Austritt des Tropfenabscheiders nur noch relativ wenig umgelenkt zu werden braucht, was den Druckverlust verhindern hilft.

An die Umlenk- und Abscheidestrecke III schließt sich wie bei den Profilen nach Fig. 2 eine schwach gekrümmte Diffusorstrecke IV an, in der die Geschwindigkeitsenergie weitgehend zurückgewonnen wird. Der gewünschte Diffusor-Öffnungswinkel läßt sich durch entsprechende Bemessung von Verdickungen VI an den Enden der Profile einstellen. Über die gerade abgeschnittenen Verdickungen VI können in der Ebene E5 Bretter gelegt werden, welche den Tropfenabscheider begehbar machen.

Bei dem Tropfenabscheider nach Fig. 6 treffen die Tropfen unter einem günstigen Winkel $\sigma$ auf die erste Abscheidefläche AI und mit einer so bemessenen Strömungsgeschwindigkeit auf die erste Abscheidefläche auf, daß Tropfenreflexion weitgehend vermieden ist. Hierzu tragen auch noch folgende Gestaltungsmerkmale bei: Der Krümmungsradius $r_{1.1}$ ist auf der konkaven Profilseite in der ersten Umlenkung III vergleichsweise klein, nämlich kleiner oder höchstens gleich etwa dem 0,25-fachen des Mittenabstandes t gewählt. Der Krümmungsradius $r_{2.1}$ ist größer als der genannte Wert gewählt, um die Umlenkverluste der Gasströmung gering zu halten und Übergeschwindigkeiten zu vermeiden. Die mit $r_{1.1}$ abgerundete Kehle auf der konkaven Profilseite ist um die Größe h gegenüber der Tropfenbeschleunigungsstrecke II eingezogen, wobei vorteilhaft h = (0,05 bis 0,2).t gewählt wird. Diese Ausgestaltung unterbindet ein die Tropfenreflexion begünstigendes, annähernd tangentiales Auftreffen der Tropfen auf die Abscheideflächen weitgehend.

Bei kleinem Mittenabstand der Profile wird die mittlere Geschwindigkeit der Gasphase in der Umlenkstrecke III gegenüber der Geschwindigkeit in der Tropfenbeschleunigungsstrecke II verkleinert. Diese Tendenz schwächt sich mit zunehmendem Mittenabstand t ab und kehrt sich schließlich um. Mit ein und demselben Profil lassen sich also je nach der Wahl des Mittenabstandes t unterschiedliche Ergebnisse erzielen. Es ist also wichtig, den Mittenabstand t an die jeweilige Abscheidungsaufgabe angepaßt zu wählen.

In den Fig. 7a und 7b sind Ausschnitte der Abscheideflächen A (z. B. A1 in Fig. 6) vergrößert dargestellt. Die Abscheideflächen A sind mit Flüssigkeitsfilmen bedeckt, die aus den eingefangenen Tropfen gebildet werden. Diese Flüssigkeitsfilme weisen eine wellige Oberflächenstruktur auf, wie gezeigt. Je nach dem, wo ein Tröpfchen T auf die Welle auftrifft, ergeben sich unterschiedliche effektive Auftreffwinkel, die sich erheblich von dem Auftreffwinkel $\delta$ mit der Wandfläche selbst unterscheiden können. Dies kann zu vereinzelten Reflexionen von Tropfen T führen, wie in Fig. 7a verdeutlicht. Trifft ein Tröpfchen $T_2$ auf einen noch nicht vollständig vom Flüssigkeitsfilm aufgenommenes Tröpfchen $T_1$ auf, so ist gemäß Fig. 7b in seltenen Fällen ebenfalls mit einer Reflexion von Tröpfchen $T_2$ zu rechnen.

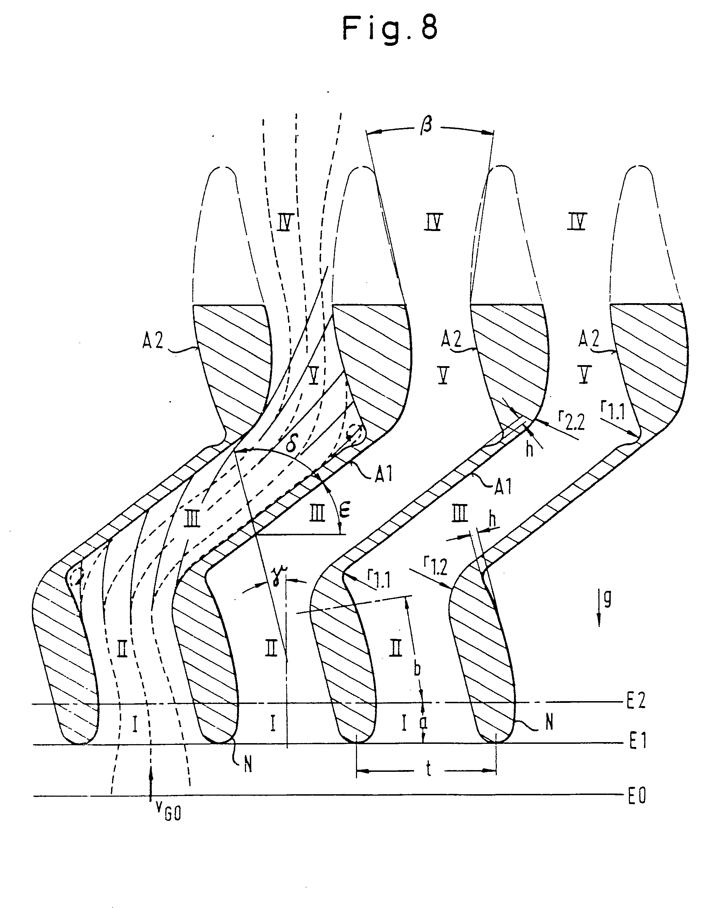

Der in Fig. 8 gezeigte Tropfenabscheider ist zur Erzielung höherer Abscheidegrade zweistufig ausgebildet. Hierzu schließt an eine erste Umlenk- und Abscheidestrecke III mit erster Abscheidefläche A1 eine zweite Umlenk- und Abscheidestrecke V mit einer zweiten Abscheidefläche A2 an, die in entgegengesetztem Richtungssinne zur ersten Umlenkung abgewinkelt ist. Die Krümmungsradien $r_{2.1}$ und $r_{2.2}$ an der zweiten Umlenkung sind in diesem Fall gleich gewählt wie die Krümmungsradien $r_{1.1}$ und $r_{1.2}$ an der ersten Umlenkung, ebenso auch die Einziehung h auf der konkaven Profilseite der zweiten Umlenkung. In der Strecke V werden an der ersten Abscheidefläche A1 noch nicht abgeschiedene Tropfen an der zweiten Abscheidefläche A2 abgeschieden.

Anschließend an die Strecke V können die Profile wie gestrichelt dargestellt ausgebildet sein und dadurch diffusorartige Erweiterungen IV mit einem Öffnungswinkel $\beta$ bilden.

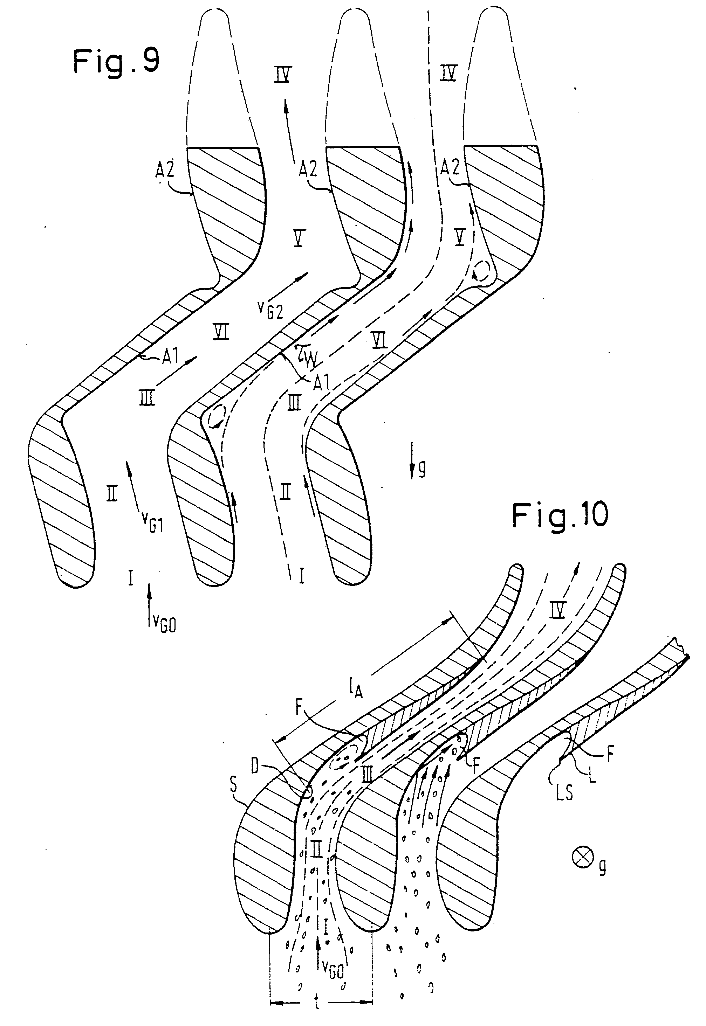

Bei der durchgezogenen gezeigten Ausbildung in den Endabschnitten der Profilen ist wieder möglich, Bretter auf die Abschlußkanten der Profile zu legen und damit den Tropfenabscheider begehbar zu machen. Die Ausführung nach Fig. 9 zeigt eine Profilkonfiguration, die grundsätzlich derjenigen nach Fig. 8 entspricht. Unterschiedlich ist, daß an die erste Umlenk- und Abscheidestrecke III eine zweite Tropfenbeschleunigungsstrecke VI in Form einer Verengung anschließt. Diese Verengung wird durch in Strömungskannalrichtung zunehmende Wandstärke des Profiles erzielt. Die Verengung geht dann in die zweite Umlenk- und Abscheidestrecke V über, die wie anhand der Fig. 8 beschrieben gestaltet ist und hier nicht nochmals beschrieben wird. Ein weiterer Unterschied ist, daß die von der Anströmung abgewandte Profilseite 3 konvex, das heißt, in den Strömungskanal hinein, gewölbt ist, während die Profilseite 2 im wesentlichen eben bzw. schwach konkav gewölbt ist.

Bei der Ausführung nach Fig. 9 wird der überwiegende Anteil der größeren Tropfen in der ersten Stufe, d. h. an der ersten Abscheidefläche A1 abgeschieden, während reflektierte und kleinere Tropfen in der zweiten Abscheidestufe an der Fläche A2 abgeschieden werden.

Die Ausführung nach Fig. 9 hat Vorteile hinsichtlich der Entwässerung. Dies läßt sich mit der Wandschubspannungsverteilung $\tau_W$ erklären. Die geringen Wandschubspannung $\tau_W$ auf der Oberseite des Profiles gegenüber der Abscheidefläche A1 ermöglichen ein ungestörtes Abfließen des in der zweiten Stufe an der Abscheidefläche A2 abgeschiedenen Wassers zurück in Bereiche mit geringeren Luftgeschwindigkeiten. Das Abfließen abgeschiedenen Wassers ist in der ersten Stufe ohnehin erleichtert, weil hier nur größere Tropfen eingefangen werden sollen und deshalb mit kleineren Luftgeschwindigkeiten gearbeitet werden kann.

Je nach der Tropfengrößenverteilung und dem angestrebten Abscheidegrad kann auch eine vielstufige Ausführung nach den Figuren 8 oder 9 sinnvoll sein (nicht dargestellt).

Fig. 10 zeigt eine Ausführung mit stark geneigter bzw. vertikaler Anordnung der Profillängsrichtung. Angedeutet ist dies durch den senkrecht zur Zeichenebene weisenden Pfeil für die Erdbeschleunigung g in Fig. 10.

Die Ausführung nach Fig. 10 ähnelt der Profilgestaltung nach Fig. 2 bis auf Fangrillen F mit Lippen L, deren Lippenspitze LS einen Abstand von 1/4 bis 2/3 der Länge $l_A$ der Abscheidefläche Al vom Scheitel der ersten Umlenkstelle auf der konkaven Profilseite bzw. der Druckseite der Profile hat. Von den Fangrillen F werden auch reflektierte Tropfen eingefangen. Die Fangrillen liegen in einem Bereich der von der Eintrittsseite her gut mittels eines Wasserstrahles zu Reinigungszwecken erreicht werden kann. Dies ist insbesondere bei Anwendung des Tropfenabscheiders in einem Rauchgaswäscher von Vorteil, wo die Tropfen mit krustenbildenden Stoffen beladen sind.

## Patentansprüche

1. Verfahren zum Abscheiden von Tropfen aus einer Gasströmung, die über Strömungskanäle mit Verengungen und Umlenkungen geführt wird, wobei die Wände der Strömungskanäle zum Abströmenlassen der abgeschiedenen Flüssigkeit auf diesen Wänden zum Eintritt der Strömungskanäle hin unter Schwerkraftwirkung ausgerichtet sind, dadurch gekennzeichnet, daß die Strömung in den zwischen benachbarten Profilen gebildeten Strömungskanälen vor der ersten Umlenkung so beschleunigt wird, daß mindestens die kleinen Tropfen am Eintritt in die Umlenkung eine Geschwindigkeit erreichen, die gleich oder nur noch relativ wenig unterhalb der Geschwindigkeit der Gasströmung ist.

2. Tropfenabscheider zum Abscheiden von Tropfen aus einer Gasströmung, wobei mittels Profilen mit Verengungen und Umlenkungen versehene Strömungskanäle gebildet sind, an deren Wände die Tropfen abgeschieden werden und die so ausgerichtet sind, daß die abgeschiedene Flüssigkeit auf diesen Wänden zum Eintritt der Strömungskanäle hin unter Wirkung der Schwerkraft abströmen kann, dadurch gekennzeichnet, daß zwischen benachbarten Profilen (1) vor der ersten Umlenkung (III) je eine Tropfenbeschleunigungsstrecke (II) vorgesehen und derart bemessen ist, daß mindestens kleine Tropfen am Eintritt in die Umlenkung auf eine Geschwindigkeit beschleunigt sind, die nur noch wenig verschieden von der Gasgeschwindigkeit ist.

3. Tropfenabscheider nach Anspruch 2, dadurch gekennzeichnet, daß eine Gasbeschleunigungsstrecke (I) mit schneller Querschnittsverringerung des Strömungskanals und daran in Strömungsrichtung anschließend die Tropfenbeschleunigungsstrecke (II) mit im wesentlichen gleichbleibendem oder im wesentlichen stetig sich verengendem Strömungsquerschnitt zwischen zwei benachbarten Profilen (1) ausgebildet sind.

4. Tropfenabscheider nach Anspruch 3, dadurch gekennzeichnet, daß die Länge (a) der Gasbeschleunigungsstrecke (I) etwa das 0,2- bis 1-fache der Länge der Tropfenbeschleunigungsstrecke (II) beträgt.

5. Tropfenabscheider nach Anspruch 3 oder 4, dadurch gekennzeichnet, daß jedes Profil (1) im Bereich der Tropfenbeschleunigungsstrecke von einer anströmseitigen Profilnase (N) ausgehend auf eine Profilstärke (s) von etwa dem 0,2- bis 0,6-fachen des Mittenabstandes (t) zweier benachbarter Profile ansteigt und daß die Länge (b) der Tropfenbeschleunigungsstrecke etwa das 0,5- bis 2-fache des Mittenabstandes (t) zweier benachbarter Profile beträgt.

6. Tropfenabscheider nach Anspruch 5, dadurch gekennzeichnet, daß die vorbestimmte größte Profilstärke (s) über die Länge (b) der Tropfenbeschleunigungsstrecke (II) im wesentlichen konstant ist.

7. Tropfenabscheider nach einem der Ansprüche 2 bis 6, dadurch gekennzeichnet, daß der Querschnitt der Profile asymmetrisch gestaltet ist.

8. Tropfenabscheider nach einem der Ansprüche 2 bis 7, dadurch gekenneichnet, daß die Stärke der Profile in Richtung zur Austrittsebene (E5) der Strömungskanäle, beginnend mit der ersten Umlenkung (III) zur Bildung von Diffusoren (IV) mit einem Öffnungswinkel (β) zwischen 4˚ und 12˚ vermindert ist.

9. Tropfenabscheider nach einem der Ansprüche 2 bis 8, dadurch gekennzeichnet, daß die Profile mit zur Eintrittsebene (E1) hin ausmündenden Ablaufrinnen (10-12) für die abgeschiedene Flüssigkeit versehen sind.

10. Tropfenabscheider nach einem der Ansprüche 2 bis 9, dadurch gekennzeichnet, daß jede Tropfenbeschleunigungsstrecke zur Anströmrichtung die erste Umlenkung verstärkend unter einem Winkel (γ) nicht größer als 30˚, vorzugsweise zwischen 5˚ und 20˚, geneigt ist.

11. Tropfenabscheider nach einem der Ansprüche 2 bis 10, dadurch gekennzeichnet, daß in der Tropfenbeschleunigungsstrecke die eine Profilseite (3) konvex in die Strömung hineingewölbt und die andere Profilseite (2) im wesentlichen eben ist.

12. Tropfenabscheider nach Anspruch 10 oder 11, dadurch gekennzeichnet, daß die Tropfenbeschleunigungsstrecke zwischen dem in Anströmrichtung ausgerichteten Eintritt und dem an der ersten Umlenkung vorgesehenen Austritt schwach gekrümmt ist.

13. Tropfenabscheider nach einem der Ansprüche 2 bis 12, dadurch gekennzeichnet, daß an die Abscheidefläche (A1) hinter der ersten Umlenkung mindestens eine zweite Umlenkung, gegebenenfalls mit nachfolgender weiterer Abscheidefläche (A2), anschließt.

14. Tropfenabscheider nach einem der Ansprüche 2 bis 13, dadurch gekennzeichnet, daß der Krümmungsradius ($r_{1.1}$, $r_{2.1}$) auf der konkaven Profilseite an der oder jeder Umlenkung kleiner oder gleich etwa dem 0,25-fachen des Mittenabstandes (t) zweier benachbarter Profile ist und-/oder daß der Krümmungsradius ($r_{1.2}$, $r_{2.2}$) auf der konvexen Profilseite an der oder jeder Umlenkung größer oder gleich etwa dem 0,25-fachen des Mittenabstandes (t) zweier benachbarter Profile ist.

15. Tropfenabscheider nach Anspruch 13, dadurch gekennzeichnet, daß der Strömungskanal im Bereich hinter der ersten und/oder hinter jeder weiteren Umlenkung eine Verengung zum Schaffen einer weiteren Tropfenbeschleunigungsstrecke aufweist.

16. Tropfenabscheider nach einem der Ansprüche 2 bis 15, dadurch yekennzeichnet, daß die Austrittsenden der Profile verdickt sind.

17. Tropfenabscheider zum Abscheiden von Tropfen aus einer Gasströmung, wobei mittels Profilen mit Verengungen und Umlenkungen versehene Strömungskanäle gebildet sind, an deren Wänden die Tropfen abgeschieden werden und die so ausgerichtet sind, daß die abgeschiedene Flüssigkeit im wesentlichen quer zur Hauptströmungsrichtung auf diesen Wänden unter Wirkung der Schwerkraft abströmen kann, wobei zwischen benachbarten Profilen eine Tropfenbeschleunigungsstrecke im Bereich vor der ersten Umlenkung gebildet ist und Fangrillen auf der oder jeder auf eine Umlenkung folgenden Abscheidefläche vorgesehen sind, dadurch gekennzeichnet, daß die Tropfenbeschleunigungsstrecke derart bemessen ist, daß mindestens kleine Tropfen am Eintritt in die Umlenkung auf eine Greschwindigkeit beschleunigt sind, die nur noch wenig verschieden von der fasgeschwindigkeit ist, und daß die größte Profilstärke (s) jedes Profils etwa das 0,2- bis 0,6-fache des Mittenabstandes (t) zweier benachbarter Profile beträgt, daß die Länge (b) der Tropfenbeschleunigungsstrecke etwa das 0,5- bis 2-fache des Mittenabstandes (t) beträgt und daß die Fangrillen (F) so auf den Abscheideflächen angeordnet sind, daß ihre Spitze (LS) in Strömungsrichtung gesehen einen Abstand von der vorausgehenden Umlenkung zwischen 1/4 und 2/3 der Länge ($l_A$) der auf die Umlenkung folgenden Abscheidefläche haben.

**Claims**

1. A method of eliminating droplets from a gaseous flow that is guided through flow passageways including constrictions and deflecting sections, the walls of the flow passageways being oriented so that the eliminated liquid may flow off along said walls towards the inlet portion of the flow passageways under the action of gravity, characterised in that the flow in the flow passageways formed between adjacent profile elements is accelerated upstream of the first deflecting section so that at the inlet to the deflecting section at least the small droplets achieve a velocity which is equal to or only comparatively slightly less than the velocity of the gaseous flow.

2. Mist eliminator for eliminating droplets from a gaseous flow, in which flow passageways including constrictions and deflecting sections are formed by means of profile elements on the walls of which the droplets are eliminated and which are oriented such that the eliminated liquid may flow along said walls towards the inlet portion of the flow passageways under the action of gravity, characterised in that a respective droplet accelerating section (II) is provided between adjacent profile elements (1) upstream of the first deflecting section (III), said accelerating section being dimensioned so that at least small droplets are accelerated at the inlet to the deflecting portion to a velocity which differs only slightly from the gas flow velocity.

3. Mist eliminator as claimed in claim 2, characterised in that between two adjacent profile elements (1) there is formed a gas accelerating section (I) with rapid reduction of the flow passage cross-section, which is succeeded downstream thereof by the droplet accelerating section (II) of substantially constant or substantially progressively decreasing flow cross-section.

4. Mist eliminator as claimed in claim 3, characterised in that the length (a) of the gas accelerating section (I) is approximately 0.2 times to 1 times the length of the droplet accelerating section (II).

5. Mist eliminator as claimed in claim 3 or claim 4, characterised in that in the vicinity of the droplet accelerating section each profile element (1), starting from a profile nose (N) on the side of the approaching flow, increases to a profile thickness (s) of about 0.2 to 0.6 times the centre distance (t) between two adjacent profile elements, and that the length (b) of the droplet accelerating section is about 0.5 times to twice the centre distance (t) between two adjacent profile elements.

6. Mist eliminator as claimed in claim 5, characterised in that the predetermined maximum profile element thickness (s) is substantially constant throughout the length (b) of the droplet accelerating section (II).

7. Mist eliminator as claimed in any one of the claims 2 to 6, characterised in that the cross-section of the profile elements is of non-symmetrical configuration.

8. Mist eliminator as claimed in any one of the claims 2 to 7, characterised in that the thickness of the profile elements is reduced towards the exit plane (E5) of the flow passageways, starting with the first deflecting section (III), so as to provide diffusors (V) having a flare angle (β) of between 4° and 12°.

9. Mist eliminator as claimed in any one of the claims 2 to 8, characterised in that the profile elements are provided with drain-off flutes (10-12) for the eliminated liquid, said drain-off flutes opening towards the inlet plane (E1).

10. Mist eliminator as claimed in any one of the claims 2 to 9, characterised in that each droplet accelerating section is inclined relative to the approach flow direction at an angle (γ) of not more than 30°, preferably between 5° and 20°, whereby the first deflecting section is increased.

11. Mist eliminator as claimed in any one of the claims 2 to 10, characterised in that in said droplet accelerating section one profile element side (3) is convexly curved into the flow while the other profile element side (2) is substantially planar.

12. Mist eliminator as claimed in claim 10 or claim 11, characterised in that the droplet accelerating section between the inlet, which is oriented in approach flow direction, and the exit at the first deflecting section is slightly curved.

13. Mist eliminator as claimed in any one of the claims 3 to 12, characterised in that the eliminating surface (A1) is succeeded downstream of the first deflecting section by at least a second deflecting section, optionally with a further eliminating surface (A2) downstream thereof.

14. Mist eliminator as claimed in any one of the claims 2 to 13, characterised in that the radius of curvature ($r_{1.1}$, $r_{2.1}$) on the concave profile element side at the or each deflecting section is less than or equal to about 0.25 times the centre distance (t) between two adjacent profile elements, and/or that the radius of curvature ($r_{1.2}$, $r_{2.2}$) on the convex profile element side at the or each deflecting section is greater than or equal to about 0.25 times the centre distance (t) between two adjacent profile elements.

15. Mist eliminator as claimed in claim 13, characterised in that the flow passageway in the area downstream of the first and/or downstream of every further deflecting section includes a constriction to provide a further droplet accelerating section.

16. Mist eliminator as claimed in any one of the claims 2 to 15, characterised in that the exit ends of the profile elements are enlarged.

17. Mist eliminator for eliminating droplets from a gaseous flow, in which flow passageways including constrictions and deflecting sections are formed by means of profile elements on the walls of which the droplets are eliminated and which are oriented such that the eliminated liquid may flow off along said walls substantially transversely to the main flow direction under the action of gravity, a droplet accelerating section being provided between adjacent profile elements in the area upstream of the first deflecting section and collecting flutes being formed on the or each eliminating surface following a deflecting section, characterised in that the droplet accelerating section is dimensioned so that at least small droplets are accelerated at the inlet to the deflecting section to a velocity which differs only slightly from the gas flow velocity, and that the maximum thickness (s) of each profile element is about 0.2 to 0.6 times the centre distance (t) between two adjacent profile elements, that the length (b) of the droplet accelerating section is about 0.5 times to twice said centre distance (t), and that the collecting flutes (F) are disposed on the eliminating surfaces in such a way that their tips (LS), as viewed in the direction of flow, are spaced from the preceding deflecting section by between 1/4 and 2/3 of the length ($l_A$) of the eliminating surface following said deflecting section.

## Revendications

1. Procédé de séparation de gouttes d'un courant gazeux, qui est guidé par des canaux d'écoulement avec des rétrécissements et des coudes, les parois des canaux d'écoulement étant formées de telle façon qu'elles permettent l'écoulement du liquide séparé sur ces parois, vers l'entrée des canaux d'écoulement, sous l'effet de la pesanteur, caractérisé en ce que l'écoulement dans les canaux d'écoulement formés entre deux profilés contigus est accéléré avant la première déviation, de sorte que les petites gouttes au moins à l'entrée dans la déviation atteignent une vitesse qui est identique, ou seulement un peu inférieure à la vitesse du courant gazeux.

2. Séparateur de gouttes pour séparer des gouttes d'un courant gazeux, dans lequel sont constitués des canaux d'écoulement au moyen de profilés avec des rétrécissements et des coudes, sur les parois desquels les gouttes sont séparées, et qui sont tels que le liquide séparé sur ces parois puisse s'écouler vers l'entrée des canaux d'écoulement sous l'effet de la pesanteur, caractérisé en ce que entre deux profilés contigus (1) est prévue une distance d'accélération de goutte (II) avant la première déviation (III) et elle est dimensionnée de telle façon que les petites gouttes au moins à l'entrée de la déviation sont accélérées à une vitesse, qui est peu différente de la vitesse du gaz.

3. Séparateur de gouttes selon la revendication 2, caractérisé en ce qu'une distance d'accélération de gaz III est constituée avec un rétrécissement rapide de la section du canal, avec raccordement dans le sens de l'écoulement à une distance d'accélération de goutte (II) avec une section d'écoulement restant identique ou se rétrécissant constamment entre deux profilés contigus (1).

4. Séparateur de gouttes selon la revendication 3, caractérisé en ce que la longueur (a) de la distance d'accélération de gaz (I) représente environ 0,2 à 1 fois la longueur de la distance d'accélération de goutte (II).

5. Séparateur de gouttes selon la revendication 3 ou 4, caractérisé en ce que chaque profilé (1) dans la zone de la distance d'accélération de goutte commence par un nez profilé (N), constitué d'une épaisseur de profilé (S) représentant environ 0,2 à 0,6 fois l'écart médian (t) de deux profilés contigus et que la longueur (b) de la distance d'accélération des gouttes représente environ 0,5 à 2 fois l'écart médian (t) de deux profilés contigus.

6. Séparateur de gouttes selon la revendication 5, caractérisé en ce que la plus grande épaisseur de profilé (S) préconisée est essentiellement constante sur la longueur (b) de la distance d'accélération de goutte (II).

7. Séparateur de gouttes selon l'une des revendications 3 à 6, caractérisé en ce que la section des profilés est de forme asymétrique.

8. Séparateur de gouttes selon l'une des revendications 2 à 7, caractérisé en ce que l'épaisseur des profilés dans la direction du plan de sortie (E5) des canaux d'écoulement, en partant de la première déviation (III) pour former des diffuseurs (IV) est diminuée d'un angle d'ouverture β de 4 à 12°.

9. Séparateur de gouttes selon l'une des revendications 2 à 8, caractérisé en ce que les profilés sont munis de rigoles d'écoulement (10-12) pour le liquide séparé débouchant dans le plan d'entrée (E1).

10. Séparateur de gouttes selon l'une des revendications 2 à 9, caractérisé en ce que chaque distance d'accélération des gouttes est inclinée par rapport à l'incidence de l'écoulement et jusqu'à la première déviation, d'un angle (γ) qui ne dépasse pas 30°, qui est compris entre 5 et 20°.

11. Séparateur de gouttes selon l'une des revendications 2 à 10, caractérisé en ce que le long de la distance d'accélération des gouttes une face de profilé (3) est bombée de manière convexe vers l'écoulement et l'autre face de profilé (2) est essentiellement plane.

12. Séparateur de gouttes selon la revendication 10 ou 11, caractérisé en ce que la distance d'accélération de gouttes, entre l'entrée dirigée dans le sens d'incidence des gaz et la sortie sur la première déviation est légèrement courbée.

13. Séparateur de gouttes selon l'une des revendications 3 à 12, caractérisé en ce que à la surface de séparation (A1) derrière la première déviation se raccorde au moins une deuxième déviation, suivie le cas échéant d'une autre surface de séparation (A2).

14. Séparateur de gouttes selon l'une des revendications 2 à 13, caractérisé en ce que le rayon de courbure ($r_{1.1}$, $r_{2.1}$) sur la face concave de profilé de l'une ou l'autre des déviations est inférieur ou égal à environ 0,25 fois l'écart médian (t) de deux profilés contigus et/ou que le rayon de courbure ($r_{1.2}$, $r_{2.2}$) sur la face convexe du profilé de l'une ou l'autre des déviations est supérieur ou égal à environ 0,25 fois l'écart médian (t) de deux profilés contigus.

15. Séparateur de gouttes selon la revendication 13, caractérisé en ce que le canal d'écoulement derrière la première et/ou derrière chaque déviation supplémentaire présente un rétrécissement pour créer une autre distance d'accélération de goutte.

16. Dispositif selon l'une des revendications 2 à 15, caractérisé en ce que les extrémités de sortie des profilés sont épaissies.

17. Séparateur de gouttes pour séparer des gouttes d'un courant gazeux, dans lequel des canaux d'écoulement sont formés au moyen de profilés, munis de déviations et de rétrécissement et sur les parois desquels les gouttes sont séparées et dirigées de telle façon que le liquide séparé puisse s'écouler sans l'action de la pesanteur sur ces parois transversalement par rapport à la direction principale d'écoulement, une distance d'accélération de gouttes étant ménagée entre deux profilés contigus dans la zone, précédant la première déviation et des rainures de réception sont disposées sur l'une ou l'autre des surfaces de séparation suivant une déviation, caractérisé en ce que la distance d'accélération des gouttes est dimensionnée de telle façon qu'au moins les petites gouttes sont accélérées à l'entrée de la déviation à une vitesse, qui est peu différente de la vitesse du gaz et que la plus grande épaisseur (S) de profilé de chaque profilé soit environ 0,2 à 0,6 fois l'écart médian de deux profilés contigus, de sorte que la longueur (b) de la distance d'accélération des gouttes soit environ 0,5 à 2 fois l'écart médian (t) et que les rainures de réception (F) soient disposées sur les surfaces de séparation de sorte que leurs extrémités (LS) vues dans le sens d'écoulement soient à une distance de la déviation précédente représentant entre 1/4 et 2/3 de la longueur ($l_A$) de la surface de séparation suivant la déviation.

# Fig.1

# Fig.2

# Fig.3

# Fig.4

# Fig.5

# Fig.6

# Fig.7a

# Fig.7b

Fig. 8

Fig.9

Fig.10